# EUROPEAN PATENT APPLICATION

(11) **EP 3 757 500 A1**
(43) Date of publication of application: **30.12.2020**
(21) Application number: 19183257.5
(22) Date of filing: 28.06.2019
(51) Int. Cl.: F28D 20/00, F28D 17/00

(54) **THERMAL ENERGY STORAGE DEVICE**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Zaczek, Alexander, 22765 Hamburg (DE)
(74) Representative: Aspacher, Karl-Georg

(57) **Abstract**

A heat storage (100) for a thermal energy storage plant (10) comprises:
a hollow housing (170) comprising an inlet (101) and an outlet (102),
a granular material (160) for storing heat housed in the hollow housing (170) between the inlet (101) and the outlet (102),
the hollow housing (170) defining a fluid passage for the circulation of a heat transporting fluid between the inlet (101) and the outlet (102) and through the granular material (160).

The granular material (160) subject to the gravity force forms at least one free surface (161, 162) respectively facing the inlet (101) or the outlet (102) the at least one free surface (161, 162) including a border (A, B) in contact with the hollow housing (170) and being inclined with respect to the gravity direction, the respective inlet (101) or outlet (102) being with respect to the gravity direction at a higher level than a lowest point (A) of the at least one free surface (161, 162).

## Description

### Field of invention

The present invention relates to a storage device for storing thermal energy.

### Art Background

It is known to store fluctuating electrical energy as heat inside heat storages. The electrical energy may be generated in renewable and/or traditional power plants running on fossil fuels. The electrical energy from such plants is stored in heat storages when the electricity demand is low. The stored heat is reconverted back to electrical energy in times when the demand is higher than the production. The heat storages are usually part of thermal energy storage plants which typically further comprise a heater, a steam generator, a steam turbine, a heat transporting fluid, a storage material inside the heat storage and a piping system. The storage material may be a granular material, for example comprising a plurality of stones. The granular material is housed inside a hollow housing extending between an inlet and an outlet. The inlet and an outlet need to be open to allow the flowing of a heat transporting fluid, which exchanges heat with the granular material. It is known to provide grated structures at the inlet and outlet of the heat storage to contain the granular material inside the hollow housing of the heat storage. The thermo-mechanical forces originating from the storage material may require thick and heavy grated structures to be constructed to withstand such forces and contain the storage material inside the hollow housing. Thick and heavy grated structures may be associated with undesired manufacturing complexity, costs and weight of the heat storage.

There may be a need for providing a heat storage device where the thermo-mechanical forces originating from the storage material are limited as much as possible to avoid the above mentioned inconveniences.

### Summary of the Invention

This need may be met by the subject matter according to the independent claims. Advantageous embodiments of the present invention are described by the dependent claims.

According to the invention there is provided a heat storage for a thermal energy storage plant, the heat storage comprising:
a hollow housing comprising an inlet and an outlet,
a granular material for storing heat housed in the hollow housing between the inlet and the outlet,
the hollow housing defining a fluid passage for the circulation of a heat transporting fluid between the inlet and the outlet and through the granular material,
wherein the granular material subject to the gravity force forms at least one free surface respectively facing the inlet or the outlet the at least one free surface including a border in contact with the hollow housing and being inclined with respect to the gravity direction, the respective inlet or outlet being with respect to the gravity direction at a higher level than a lowest point of the at least one free surface.

As "granular material" it is meant any conglomerate of discrete solid elements or particles, for example stones or rocks, having a convenient thermal capacity for storing thermal energy at a desired temperature range. The discrete solid elements which constitute the granular material may a spheroidal shape or polyhedral shape, for example comprising a plurality of flat surfaces and/or curved surface. The type, shape and dimensions of the discrete solid elements which constitute the granular material may be chosen to achieve the desired level of friction between such solid elements. This may permit to control expansion and contraction of the granular material, for example during thermal exchanges with the heat transporting fluid. As "heat transporting fluid" it is meant any suitable fluid for transporting thermal energy, for example air.

The heat storage according to the present invention is shaped in such a way that the granular material arranges itself near the inlet and the outlet in a naturally forming heap angle, preventing the granular material subject to the gravity force to exit the hollow housing through the inlet and/or the outlet. The granular material weight is supported by the hollow housing so that no grates are required to contain the granular material between the inlet and the outlet of the heat storage. The geometry of the heat storage prevents the granular material subject to the gravity force to exit the hollow housing through the inlet and/or the outlet in all conditions, including thermal expansion of the granular material towards the inlet and/or the outlet.

The fluid passage comprises at least a first portion crossing the inlet and a last portion crossing the outlet. According to embodiments of the present invention, any of the first or last portions of the fluid passage may orthogonal or parallel to the gravity direction or inclined with respect thereto.

According to embodiments of the present invention, the hollow housing comprises at least a bottom wall and a top wall, the top wall being with respect to the gravity direction at a higher level than the bottom wall, the at least one free surface extending between the lowest point in contact with the bottom wall and a highest point in contact with the top wall. The bottom wall may have a higher curvature than the top wall. When seen from the inside of the heat storage, the bottom wall may be substantially convex, i.e. bent towards the outside of the housing, and the top wall may be also substantially convex or planar. According to other embodiments of the present invention, when seen from the inside of the heat storage, the bottom wall may be substantially convex and the top wall may be substantially concave, i.e. bent towards the inside of the housing.

According to embodiments of the present invention, the top wall comprises a flexible foil. A flexible foil can compensate expansions or contractions of the granular material.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic sectional view of a heat storage, according to a first exemplary embodiment of the present invention,
- Fig. 2: shows a detailed view of the heat storage of figure 1,
- Fig. 3: shows a detailed view of a heat storage, according to a second exemplary embodiment of the present invention,
- Fig. 4: shows a schematic sectional view of a heat storage, according to a third exemplary embodiment of the present invention,
- Fig. 5: shows a schematic sectional view of a heat storage, according to a fourth exemplary embodiment of the present invention,
- Fig. 6: shows a schematic sectional view of a heat storage, according to a fifth exemplary embodiment of the present invention,
- Fig. 7: shows a schematic sectional view of a heat storage, according to a sixth exemplary embodiment of the present invention,
- Fig. 8: shows a schematic sectional view of a heat storage, according to a seventh exemplary embodiment of the present invention.

### Detailed Description

The illustrations in the drawings are schematically. It is noted that in different figures, similar or identical elements are provided with the same reference signs.

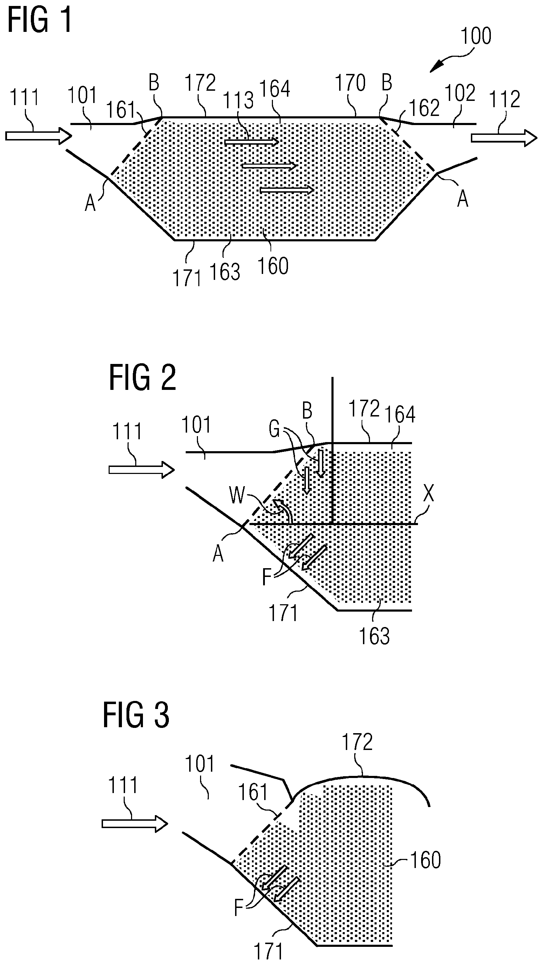

**Figures 1** and **2** schematically show a heat storage 100 for a thermal energy storage plant (not shown as whole). The heat storage 100 comprises a hollow housing 170 comprising an inlet 101 and an outlet 102 and a granular material 160 for storing heat. The granular material 160 is housed in the hollow housing 170 between the inlet 101 and the outlet 102. The granular material comprises a plurality of discrete solid elements or particles, for example stones or rocks, having a convenient thermal capacity for storing thermal energy at a desired temperature range. The granular material 160 occupies at least a portion of the volume of the hollow housing 170 comprised between the inlet 101 and the outlet 102. The hollow housing 170 defines a fluid passage for the circulation of a heat transporting fluid between the inlet 101 and the outlet 102 and through the granular material 160. The fluid passage comprises a first portion 111 crossing the inlet 101, an intermediate portion 113 crossing granular material 160 and a last portion 112 crossing the outlet 102. The intermediate portion 113 is oriented according to a horizontal or substantially horizontal direction, i.e. orthogonal or substantially orthogonal to the gravity direction. The first portion 111 and the last portion 112 are also both oriented according to a horizontal or substantially horizontal direction, i.e. orthogonal or substantially orthogonal to the gravity direction. The hollow housing 170 comprises a bottom wall 171 and a top wall 172 joined together, in order to laterally, i.e. in a direction orthogonal to sections in the attached figures, contain the granular material 160. The top wall 172 is with respect to the gravity direction at a higher level than the bottom wall 171. The bottom wall 171 and the top wall 172 are both substantially convex, when seen from the inside of the heat storage 100. The bottom wall 171 may have a higher curvature than the top wall 172. According to other embodiments of the invention (not shown), the bottom wall 171 is substantially convex and the top wall 172 is substantially concave, when seen from the inside of the heat storage 100. The bottom wall 171 collects and supports the weight of the granular material 160. In a direction transversal to the fluid passage 111, 112, 113, the inlet 101 and the outlet 102 are closer to the top wall 172 than to the bottom wall 171. In the embodiment of Figures 1 and 2 the inlet 101 and the outlet 102 are intermediate, along the direction transversal to the fluid passage 111, 112, 113, between the top wall 172 than to the bottom wall 171.

In a direction transversal to the fluid passage 111, 112, 113, the granular material 160 extends in the hollow housing 170 between a bottom surface 163, in contact with the bottom wall 171 and a top surface 164, which may be in contact with the top wall 172. The granular material 160 subject to the gravity force forms a first free surface 161 and a second free surface 162, respectively facing the inlet 101 and the outlet 102. Each of the two free surfaces 161, 162 includes a border A-B in contact with the hollow housing 170. The border A-B is a closed line of which only the linear projection is visible in attached figures. The border A-B may be circular or include on or more curved or linear edges, depending on the shape of the hollow housing 170 on a sectional view transversal to the ones of the attached figures. The border A-B is inclined, i.e. not parallel, with respect to the gravity direction. Following the gravity force G the discrete solid elements or particles which constitute the granular material 160 naturally form the two free surfaces 161, 162 inclined according to a heap angle W with respect to a horizontal direction X. During charging, i.e. while the granular material 160 receives heat, and discharging, i.e. while heat is transferred from the granular material 160, of the heat storage 100 the granular material 160 may expand and contract and the heap angle W may change. In situations where the granular material 160 slides and the heap angle W begins to flatten the shape of the hollow housing 170, in particular close to the inlet 101 and the outlet 102, can still provide an accommodation for the granular material 160. The border A-B of each of the two free surfaces 161, 162 extends, with respect to the gravity direction, between a lowest point A and the highest point B. The lowest point A is in contact with the bottom wall 171 and a highest point B is in contact with the top wall 172 The inlet 101, with or respect to the gravity direction, is at a higher level than the lowest point A of the first free surface 161. The outlet 102, with respect to the gravity direction, is at a higher level than the lowest point A of the second free surface 162. The relative positions along the gravity direction between the border A-B of each of the two free surfaces 161, 162 and the inlet 101 and the outlet 102, respectively, prevent the granular material subject to the gravity force to exit the hollow housing through the inlet 101 and the outlet 102. The granular material weight is supported by the bottom wall 171 of the hollow housing 170. The weight forces F are directed towards the bottom wall 171 and not towards the two free surfaces 161, 162. In the embodiment of figures 1 and 2, the portion of the volume of the hollow housing 170 occupied by the granular material 160, i.e. comprised between the bottom wall 171, the top wall 172 and the two free surfaces 161, 162 forms a structure with substantially convex top and bottom parts.

**Figure 3** schematically shows another embodiment of the heat storage 100. The embodiment of figure 3 differentiates itself from the previous one in that the top wall 172 comprises a flexible foil.

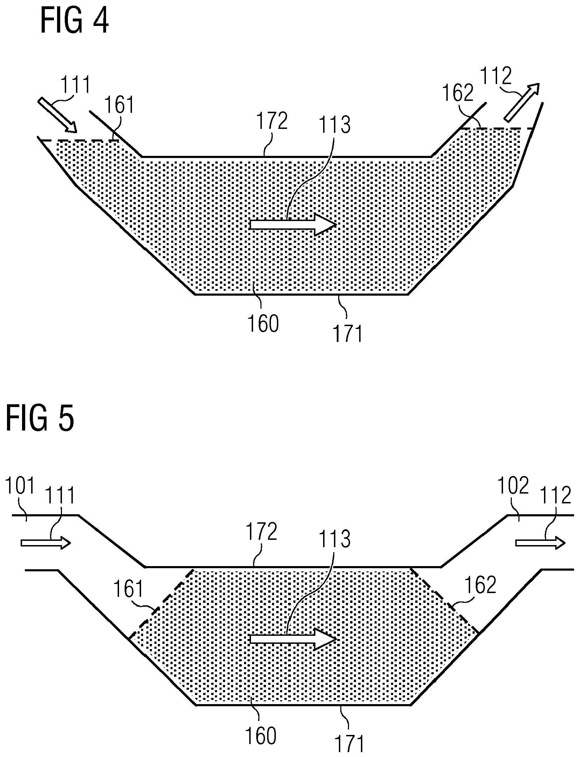

**Figure 4** schematically shows a further embodiment of the heat storage 100. The embodiment of figure 4 differentiates itself from the embodiment of figures 1 and 2 in that:
the top wall 172 is planar;
the inlet 101 and the outlet 102 are, along the direction transversal to the fluid passage 111, 112, 113, at a higher position than the top wall 172 and the bottom wall 171;
the first portion 111 and the last portion 112 of the fluid passage are both inclined with respect to the gravity direction of two respective angles respectively comprised between 0° and 90° and between 90° and 180°;
the two free surfaces 161, 162 are parallel to the horizontal direction X, i.e. orthogonal to the gravity direction, and are along the direction transversal to the fluid passage 111, 112, 113, at a higher position than both the top wall 172 and the bottom wall 171.
In such embodiment, the portion of the volume of the hollow housing 170 occupied by the granular material 160, i.e. comprised between the bottom wall 171, the top wall 172 and the two free surfaces 161, 162 forms a structure with a substantially convex bottom part and a substantially concave top part.

**Figure 5** schematically shows yet another embodiment of the heat storage 100. The embodiment of figure 5 differentiates itself from the embodiment of figures 1 and 2 in that:
the top wall 172 is planar;
the inlet 101 and the outlet 102 are, along the direction transversal to the fluid passage 111, 112, 113, at a higher position than the top wall 172 and the bottom wall 171.

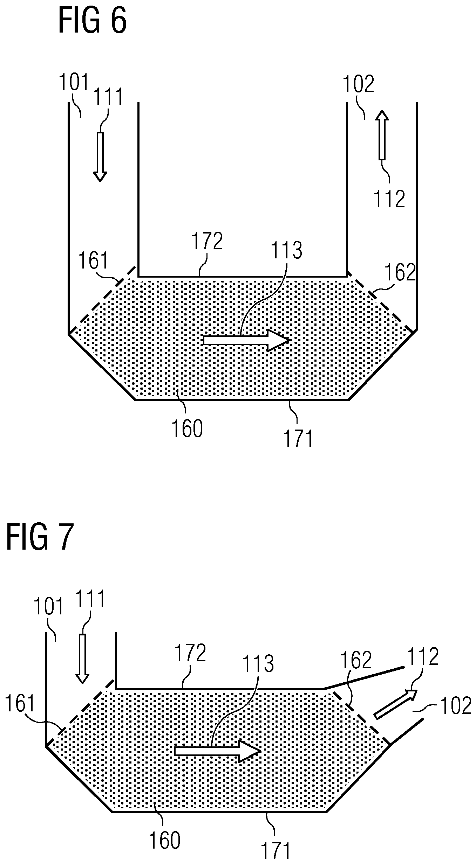

**Figure 6** schematically shows yet another embodiment of the heat storage 100. The embodiment of figure 6 differentiates itself from the embodiment of figures 1 and 2 in that:
the top wall 172 is planar;
the inlet 101 and the outlet 102 are, along the direction transversal to the fluid passage 111, 112, 113, at a higher position than the top wall 172 and the bottom wall 171;
the first portion 111 and the last portion 112 of the fluid passage are both parallel to the gravity direction.

**Figure 7** schematically shows yet another embodiment of the heat storage 100. The embodiment of figure 7 differentiates itself from the embodiment of figures 1 and 2 in that:
the top wall 172 is planar;
the inlet 101 is, along the direction transversal to the fluid passage 111, 112, 113, at a higher position than the top wall 172 and the bottom wall 171;
the first portion 111 of the fluid passage is parallel to the gravity direction.

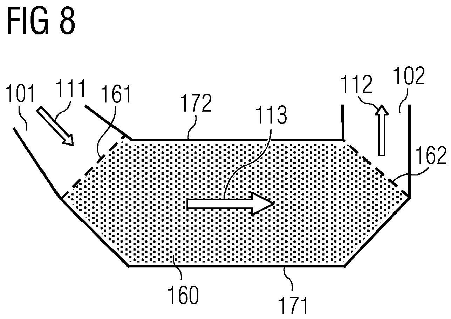

**Figure 8** schematically shows yet another embodiment of the heat storage 100. The embodiment of figure 8 differentiates itself from the embodiment of figures 1 and 2 in that:
the top wall 172 is planar;
the outlet 102 is, along the direction transversal to the fluid passage 111, 112, 113, at a higher position than the top wall 172 and the bottom wall 171;
the last portion 112 of the fluid passage is parallel to the gravity direction.

## Claims

1. A heat storage (100) for a thermal energy storage plant, the heat storage (100) comprising:
a hollow housing (170) comprising an inlet (101) and an outlet (102),
a granular material (160) for storing heat housed in the hollow housing (170) between the inlet (101) and the outlet (102),
the hollow housing (170) defining a fluid passage for the circulation of a heat transporting fluid between the inlet (101) and the outlet (102) and through the granular material (160),
wherein the granular material (160) subject to the gravity force forms at least one free surface (161, 162) respectively facing the inlet (101) or the outlet (102) the at least one free surface (161, 162) including a border (A-B) in contact with the hollow housing (170) and being inclined with respect to the gravity direction, the respective inlet (101) or outlet (102) being with respect to the gravity direction at a higher level than a lowest point (A) of the at least one free surface (161, 162).

2. The heat storage (100) according to claim 1, wherein the fluid passage comprises at least a first portion crossing the inlet (101) and a last portion crossing the outlet (102), at least one of said first or last portion being orthogonal to the gravity direction.

3. The heat storage (100) according to claim 1 or 2, wherein the fluid passage comprises at least a first portion crossing the inlet (101) and a last portion crossing the outlet (102), at least one of said first or last portion being parallel to the gravity direction.

4. The heat storage (100) according to any of the previous claims, wherein the fluid passage comprises at least a first portion crossing the inlet (101) and a last portion crossing the outlet (102), at least one of said first or last portion being inclined with respect to the gravity direction.

5. The heat storage (100) according to any of the previous claims, wherein the hollow housing (170) comprises at least a bottom wall (171) and a top wall (172), the top wall (172) being with respect to the gravity direction at a higher level than the bottom wall (171), the at least one free surface (161, 162) extending between the lowest point (A) in contact with the bottom wall (171) and a highest point (B) in contact with the top wall (172).

6. The heat storage (100) according to claim 5, where the bottom wall (171) has a higher curvature than the top wall (172) .

7. The heat storage (100) according to claim 5 or 6, where the bottom wall (171) is substantially convex when seen from the inside of the heat storage (100) and the top wall (172) is substantially convex or planar when seen from the inside of the heat storage (100).

8. The heat storage (100) according to claim 5 or 6, where the bottom wall (171) is substantially convex when seen from the inside of the heat storage (100) and the top wall (172) is substantially concave when seen from the inside of the heat storage (100).

9. The heat storage (100) according to any of the previous claims 5 to 8, wherein the top wall (172) comprises a flexible foil.

10. A thermal energy storage plant comprising the heat storage (100) according to any of the previous claims.
